# EUROPÄISCHE PATENTSCHRIFT

(11) **EP 3 672 848 B1**
(45) Veröffentlichungstag und Bekanntmachung des Hinweises auf die Patenterteilung: **02.11.2022**
(21) Anmeldenummer: 18746117.3
(22) Anmeldetag: 17.07.2018
(51) Int. Cl.: B60T 7/22, B60T 8/17, B60T 8/1755, G08G 1/16

(54) **NOTBREMSSYSTEM EINES EINSPURFAHRZEUGS**
EMERGENCY BRAKING SYSTEM OF A SINGLE-TRACK VEHICLE
SYSTÈME DE FREINAGE D'URGENCE D'UN VÉHICULE À UNE SEULE VOIE

(30) Priorität: 22.08.2017 DE 102017214586
(43) Veröffentlichungstag der Anmeldung: 01.07.2020
(73) Patentinhaber: Bayerische Motoren Werke Aktiengesellschaft, 80809 München (DE)
(72) Erfinder: HAMM, Markus, 85737 Ismaning (DE); PURSCHWITZ, Arne, 80995 München (DE); SEIDL, Josef, 94342 Strasskirchen (DE); WAGNER, Hans-Albert, 81737 München (DE)
(86) Internationale Anmeldenummer: PCT/EP2018/069342
(87) Internationale Veröffentlichungsnummer: WO 2019/037954

(56) Entgegenhaltungen:
- EP-A2- 3 124 370
- WO-A1-2017/115371
- DE-A1-102007 053 274
- DE-A1-102012 220 355
- US-A1- 2004 098 185
- US-A1- 2013 311 075

## Beschreibung

Die Erfindung betrifft ein Notbremssystem eines Einspurfahrzeugs mit Eingriff in die Bremsanlage bzw. eine Bremse des Einspurfahrzeugs.

Im Stand der Technik sind verschiedene Bremsassistenzsysteme bekannt, die jedoch zumeist nicht in Abhängigkeit von Umgebungsparametern eines Fahrzeugs das Bremsen in einer Notsituation unterstützen können. Zudem verbessern die meisten bekannten Bremssysteme zwar das Bremsverhalten im Allgemeinen, lösen bei drohender Gefahr jedoch keinen Bremsvorgang aktiv aus. Hinzukommt, dass aus dem Stand der Technik bekannte Notbremssysteme für Einspurfahrzeuge, wie beispielsweise Motorräder, Motorroller oder andere Krafträder, ungeeignet sind, da die spezifischen Charakteristika von Einspurfahrzeugen nicht berücksichtigt werden und nicht berücksichtigt werden können.

Bremsassistenzsysteme für Einspurfahrzeuge sind beispielsweise aus den Dokumenten US 2013/311075 A1, EP 3 124 370 A2, DE 10 2012 220355 A1, DE 10 2007 053274 A1, WO 2017/115371 A1 und US 2004/098185 A1 bekannt.

Der Erfindung liegt deshalb die Aufgabe zugrunde, ein Notbremssystem bereitzustellen, mit dem ein Einspurfahrzeug in einer Notsituation in einen sicheren Zustand gebracht werden kann.

Diese Aufgabe wird durch die Merkmalskombination gemäß Patentanspruch 1 gelöst.

Erfindungsgemäß wir ein Notbremssystem eines Einspurfahrzeugs mit Eingriff in eine Bremse bzw. in eine Bremsanlage des Einspurfahrzeugs vorgeschlagen. Das Notbremssystem umfasst eine Vielzahl von Sensoren, die verschiedene physikalische Größen ermitteln, zumindest eine mit einem Sensor der Vielzahl von Sensoren verbundene Sensorauswerteeinheit und eine mit der Sensorauswerteeinheit verbundene Notbremssystemsteuereinheit. Eine physikalische Größe ist eine durch den jeweiligen Sensor quantitativ bestimmbare Eigenschaft eines physikalischen Objekts, Vorgangs oder Zustands. Der Wert der physikalischen Größe besteht aus einem Zahlenwert und einer Maßeinheit, wobei der Zahlenwert als Sensorsignal von dem jeweiligen Sensor bereitgestellt wird und die Maßeinheit zu dem jeweiligen Sensorsignal in der zumindest einen Sensorauswerteeinheit und/oder in der Notbremssystemsteuereinheit hinterlegt ist und/oder bei der Auswertung berücksichtigt wird. Die verschiedenen physikalischen Größen geben jeweils eine oder mehrere physikalische Größen von sich zueinander unterscheidenden Objekten, Vorgängen oder Zuständen an. Der jeweilige Sensor der Vielzahl von Sensoren stellt die von ihm ermittelte physikalische Größe der Sensorauswerteeinheit als ein analoges oder digitales Sensorsignal bereit. Aus den Sensorsignalen der Vielzahl von Sensoren wird der momentane Zustand des Einspurfahrzeugs und der momentane Zustand seiner Umgebung sowie das Verhalten des Einspurfahrzeugs gegenüber der Umgebung bei einem Überführen des Einspurfahrzeugs in einen sicheren Zustand bestimmt. Aufgrund bekannter Verhaltensweisen des Einspurfahrzeugs kann ein Modell des Einspurfahrzeugs erzeugt werden, dass mit seinem momentanen Zustand abgeglichen werden kann, um zusätzliche Informationen über das Einspurfahrzeug und das zu erwartende Verhalten des Einspurfahrzeugs zu generieren. Ebenso kann ein Modell der Umgebung genutzt werden, um im Abgleich mit dem momentanen Zustand der Umgebung, Informationen über die Umgebung und das zu erwartende Verhalten der Umgebung zu generieren. Die Modelle können mit den durch die Sensoren ermittelten momentanen Zuständen korrigiert und verbessert werden. Als sicherer Zustand wird bei einem Einspurfahrzeug der Stillstand des Fahrzeugs definiert, wobei das Fahrzeug dabei im Wesentlichen aufrecht steht und nicht liegt. Um von dem Sensorsignal des jeweiligen Sensors auf den Zustand des Einspurfahrzeugs und der Umgebung Einspurfahrzeugs schließen zu können, wird das Sensorsignal des Sensors durch die jeweilige Sensorauswerteeinheit ausgewertet und zumindest ein Risikowert aus dem jeweiligen Sensorsignal bestimmt. Die Sensorauswerteeinheit stellt den zumindest einen Risikowert an der Notbremssystemsteuereinheit bereit. Die Sensorauswerteeinheit kann das Sensorsignal unverändert als Risikowert weitergeben, das Sensorsignal in Abhängigkeit eines vorbestimmten Bewertungsschemas in einen vom Sensorsignal abweichenden Risikowert umwandeln oder das Sensorsignal nach einer vorbestimmten Formel oder mit Hilfe des Modells des Einspurfahrzeugs oder der Umgebung in einen vom Sensorsignal abweichenden Risikowert umrechnen. Das Sensorsignal, beispielsweise Bilddaten einer Kamera, kann durch die Sensorauswerteeinheit auch in mehrere Risikowerte, beispielsweise auf mehreren Aufnahmen der Kamera basierenden Bewegungsvektoren von mehreren Objekten, umgewandelt werden, wobei auch mehrere Risikowerte als Zwischenwerte durch die Sensorauswerteeinheiten zu einem Risikowert zusammengefasst werden können. Zudem kann das Sensorsignal und/oder ein Risikowert zwischengespeichert werden, um spätere Sensorsignale und/oder Risikowerte mit den vorhergehenden Sensorsignalen und/oder Risikowerten vergleichen zu können. Beispielsweise kann aus den Bewegungsvektoren eine Unfallwahrscheinlichkeit bestimmt werden, indem die Geschwindigkeit und der Bewegungsvektor des Einspurfahrzeugs mit den Geschwindigkeiten und den Bewegungsvektoren der Objekte in der Umgebung des Einspurfahrzeugs verglichen und mit den Modellen des Einspurfahrzeugs und der Umgebung extrapoliert werden. Anschließend wird aus den Bewegungsvektoren eine Kollisionswahrscheinlichkeit bestimmt, in dem ermittelt wird, ob die Bewegungsvektoren des Einspurfahrzeugs und der Objekte sich kreuzen und ob sie sich aufgrund ihrer jeweiligen Geschwindigkeit zur selben Zeit im oder in der Nähe des Kreuzungspunkts befinden. Von mehreren Kollisionswahrscheinlichkeiten kann auch nur die höchste Kollisionswahrscheinlichkeit als Risikowert weitergegeben werden. Der zumindest eine Risikowert wird mittels der Notbremssystemsteuereinheit in Abhängigkeit der Sensorsignale, aus denen er bestimmt ist, gewichtet, durch die Notbremssystemsteuereinheit ausgewertet und ein Unfallrisiko-Istwert aus allen Risikowerten bestimmt. Ein Risikowert kann beispielsweise in Abhängigkeit des Sensors, der die Sensorsignale ermittelt, aus denen der Risikowert bestimmt wird, im Vergleich zu anderen Risikowerten stärker oder weniger stark gewichtet werden. Aus mehreren Risikowerten können neue Risikowerte bestimmt werden, um den Zustand des Einspurfahrzeugs zu bestimmen. Beispielsweise kann aus der Geschwindigkeit, der Schräglage, des Straßenverlaufs, dem bisherigen Bewegungsvektor und dem Modell des Einspurfahrzeugs der anzunehmende zukünftige Bewegungsvektor bestimmt werden, wobei als Quellen für die einzelnen Daten bzw. Risikowerten verschiedene Sensoren und Datenquellen dienen. Zur Beurteilung der Unfallwahrscheinlichkeit wird durch das Notbremssystem aus allen Risikowerten der Unfallrisiko-Istwert bestimmt, wobei das Notbremssystem auch parallel mehrere Unfallrisiko-Istwerte, von denen z.B. ein erster Unfallrisiko-Istwert die Unfallwahrscheinlichkeit durch Kollision und einer zweiter Unfallrisiko-Istwert die Unfallwahrscheinlichkeit durch das Verlieren der Fahrbahnhaftung der Reifen des Einspurfahrzeugs berücksichtigt, bestimmen kann. Der Unfallrisiko-Istwert wird mittels der Notbremssystemsteuereinheit mit einem Unfallrisiko-Sollwert verglichen. Bei mehreren Unfallrisiko-Istwerten können diese mit einem Unfallrisiko-Sollwert oder mit mehreren Unfallrisiko-Sollwerten verglichen werden. Bei Überschreitung des Unfallrisiko-Istwertes über den Unfallrisiko-Sollwert wird die Bremse mittels der Notbremssystemsteuereinheit in Abhängigkeit der Sensorsignale der Vielzahl von Sensoren betätigt.

Die Umgebung des Einspurfahrzeugs ist jeweils der um das Einspurfahrzeug herum durch Sensoren erfasste Bereich. Unterschiedliche Sensoren können physikalische Größen in Teilbereichen der gesamten Umgebung des Einspurfahrzeugs ermitteln, woraus ein Modell der Umgebung, welche nicht der gesamten Umgebung entsprechen muss, bestimmt und/oder korrigiert wird.

Insbesondere werden bei einer vorteilhaften Ausbildungsform die Sitz- und Körperposition von Fahrer und Beifahrer erfasst. Aus der erfassten Sitz- und Körperposition wird vor dem Bremsen eine Abstützung des Fahrers und Beifahrers auf das Einspurfahrzeug gegen eine Bremskraft ermittelt. Da der Fahrer und der Beifahrer bei einer für die Bremskraft zu geringen Abstützung vom Einsetzen der Bremskraft überrascht werden, können Fahrer und Beifahrer durch Warnmittel oder ein Vorbremsen vor dem eigentlichen Eingriff in die Bremse auf die Bremsung des Einspurfahrzeugs vorbereitet werden. Ein Soll-Bremskraftverlauf, mit dem der Eingriff in die Bremse des Fahrzeugs gesteuert wird, kann die Abstützung des Fahrers und des Beifahres berücksichtigen und erhöhen, indem der Soll-Bremskraftverlauf zu Beginn eine kurze Bremsung der Maschine vorsieht, durch die Fahrer und/oder Beifahrer sich stärker am Einspurfahrzeug abstützen, bevor das Einspurfahrzeug in den sicheren Zustand überführt wird. Wird durch das Erfassen der Sitz- und Körperposition des Fahrers und/oder Beifahrers erkannt, dass die Abstützung auch nach Beginn des Bremsvorgangs, durch den Eingriff in die Bremse, nicht ausreicht um Fahrer und/oder Beifahrer mit dem Einspurfahrzeug in den sicheren Zustand zu bringen, wird ein maximaler Soll-Bremskraftverlauf ermittelt, bei dem Fahrer und/oder Beifahrer sich durch die Abstützung noch auf dem Einspurfahrzeug halten können. Dadurch wird ein Abstieg des Fahrers und/oder Beifahrers über die Front des Einspurfahrzeugs zumindest bis zu einem Aufprall des Einspurfahrzeugs auf ein Hindernis verhindert.

Bei einer vorteilhaften Weiterbildungs des Notbremssystems sind die zumindest eine Sensorauswerteeinheit und die Notbremssystemsteuereinheit durch ein einziges Steuergerät gebildet. Alternativ bilden die Sensoren der Vielzahl von Sensoren mit jeweils einer Sensorauswerteeinheit eine Sensoreinheit. Die Verarbeitung und die davon benötigte Rechenleistung kann dadurch zentral oder dezentral verteilt werden.

Die Sensorauswerteeinheit und/oder die Notbremssystemsteuereinheit kann als eigener Mikrocontroller oder als eigenständige Steuerelektronik ausgebildet oder alternativ in vorhandene Steuergeräte integriert sein.

Das Notbremssystem ist bei einer vorteilhaften Ausführungsform durch Fahrereingabe oder bei Start des Einspurfahrzeugs aktivierbar. Es kann zudem auch durch Fahrereingabe deaktivierbar sein.

Um den Zustand bzw. das Modell des Einspurfahrzeugs und der Umgebung schnell genug ermitteln bzw. korrigieren zu können, um rechtzeitig in die Bremse des Einspurfahrzeugs eingreifen zu können, müssen die Sensoren die physikalischen Größen ständig oder zumindest nahezu ständig ermitteln. Daher ist eine Ausführungsform vorteilhaft, bei der die Sensorsignale der Vielzahl von Sensoren und/oder der zumindest eine Risikowert zeitkontinuierlich oder in Intervallen, die kleiner oder gleich 100 ms sind, ausgewertet und/oder bestimmt werden/wird. Die Intervalle können zur schnelleren Reaktion des Notbremssystems auch kleiner, z.B. in einem Bereich von 1 bis 50 ms, gewählt sein oder dynamisch in Abhängigkeit der Modelle des Einspurfahrzeugs und der Umgebung oder in Abhängigkeit eines Sensors variieren.

Da das Verhalten des Einspurfahrzeugs bei einem Eingriff in eine oder beide Bremsen des Einspurfahrzeugs stark vom Fahrer und falls vorhanden von einem Mitfahrer bzw. Sozius des Einspurfahrzeugs abhängt, sieht eine weitere vorteilhafte Ausführungsform vor, den Fahrer oder alternativ den Fahrer und den Sozius zu warnen, bevor das Notbremssystem in die Bremse(n) des Einspurfahrzeugs und/oder während das Notbremssystem in die Bremse(n) des Einspurfahrzeugs eingreift. Zudem können auch Personen in der Umgebung, wie Passanten oder Fahrzeugführer in der Umgebung vor dem bevorstehenden oder dem stattfindenden Eingriff des Notbremssystems in die Bremsen des Einspurfahrzeugs gewarnt werden, um die Unfallwahrscheinlichkeit weiter zu reduzieren. Hierfür sind beim Überschreiten des Unfallrisiko-Istwertes über einen Warnwert, Warnmittel durch die Notbremssystemsteuereinheit ansteuerbar. Der Warnwert ist dabei kleiner oder gleich dem Unfallrisiko-Sollwert gewählt.

Bei einer vorteilhaften Weiterbildung sind durch die Notbremssystemsteuereinheit beim Überschreiten des Unfallrisiko-Istwertes über den Warnwert, der kleiner als der Unfallrisiko-Sollwert ist, Fahrerwarnmittel als Warnmittel zur Warnung des Fahrers ansteuerbar. Beim Überschreiten des Unfallrisiko-Istwertes über den Unfallrisiko-Sollwert sind Umgebungswarnmittel als Warnmittel zur Warnung von Personen in der Umgebung des Einspurfahrzeugs durch die Notbremssystemsteuereinheit ansteuerbar. Durch die Fahrerwarnmittel werden Fahrer bzw. Sozius auf den Eingriff in die Bremsen vorbereitet, sodass diese sich entsprechend verhalten können oder auf den bevorstehenden Eingriff hingewiesen werden. Durch das Hinweisen des Fahrers auf die Gefahr, kann der Fahrer diese abwenden, ohne dass es zu einem Eingriff des Notbremssystems in die Bremsen des Einspurfahrzeugs kommt. Durch die Umgebungswarnmittel werden Personen in der Umgebung des Einspurfahrzeugs auf das Eingreifen des Notbremssystems hingewiesen. Dadurch kann der bevorstehende Unfall, aufgrund dessen das Notbremssystem in die Bremsen eingreift, verhindert oder zumindest die schwere des Unfalls reduziert werden. Zudem wird durch die Umgebungswarnmittel die Wahrscheinlichkeit für auf einen bevorstehenden Unfall nachfolgende Unfälle, die aus dem bevorstehenden Unfall resultieren können reduziert, da beispielsweise nachfahrende Fahrzeuge gewarnt werden, wodurch diese frühzeitig Bremsen oder Ausweichen können.

Das Fahrerwarnmittel ist bei einer vorteilhaften Ausführungsform ein auf den Fahrer wirkendes Vibrationselement, erstes Akustik- oder erstes Lichtsignal und das Umgebungswarnmittel ein von dem Einspurfahrzeug an die Umgebung ausgesendetes zweites Akustik- oder zweites Lichtsignal. Das Fahrerwarnmittel kann integral durch die Notbremssystemsteuereinheit und die Bremse des Einspurfahrzeugs gebildet sein, indem die Notbremssystemsteuereinheit zur Warnung des Fahrers bzw. des Sozius die Bremse ansteuert bzw. in die Bremse eingreift und dadurch eine kurze Bremsverzögerung des Einspurfahrzeugs bzw. einen Bremsruck erzeugt. Alternativ oder zusätzlich kann die Notbremssystemsteuereinheit mit der Motorsteuerung in Verbindung stehen und zur Warnung des Fahrers bzw. des Sozius eine kurze Lastunterbrechung des Motors auslösen, sodass auf den Fahrer bzw. den Sozius ein Motor-Ruck wirkt.

Um die Schwelle zum Eingriff des Notbremssystems auf den Wunsch oder das Können des Fahrers anzupassen, sieht eine weitere vorteilhafte Ausbildungsvariante vor, dass der Unfallrisiko-Sollwert und/oder Warnwert durch Fahrereingabe und/oder sensorsignalabhängig einstellbar sind/ist.

Erfindungsgemäß wird vor dem Ansteuern der Bremse eine Wegstrecke, innerhalb der das Einspurfahrzeug zum Stillstand zu bringen ist, eine auf der Wegstrecke notwendige Verzögerung des Einspurfahrzeugs durch die Bremse und ein Soll-Bremskraftverlauf zum Erreichen der notwendigen Verzögerung über die Wegstrecke bestimmt. Die Wegstrecke, die Verzögerung und der Soll-Bremskraftverlauf werden basierend auf den Sensorsignalen der Vielzahl von Sensoren bzw. dem Modell des Einspurfahrzeugs und/oder der Umgebung bestimmt, um das Einspurfahrzeug innerhalb der Wegstrecke zum Stillstand zu bringen. Wird in mehrere Bremsen des Einspurfahrzeugs eingegriffen, kann ein Soll-Bremskraftverlauf spezifisch für jede Bremse bestimmt werden. Die Wegstrecke, die Verzögerung und der Soll-Bremskraftverlauf werden beim Ansteuern der Bremse dynamisch und basierend auf den Sensorsignalen der Vielzahl von Sensoren bzw. basierend auf dem Modell des Einspurfahrzeugs und/oder dem Modell der Umgebung angepasst. Die Bremse wird beim Ansteuern mit seiner Bremskraft dem Soll-Bremskraftverlauf folgend angesteuert.

Die Wegstrecke wird bei einer Ausbildungsvariante des Notbremssystems aus einem von einem ersten Sensor der Vielzahl von Sensoren ermittelten Abstand zu einem Hindernis und der Soll-Bremskraftverlauf aus der Wegstrecke und einem von einem zweiten Sensor der Vielzahl von Sensoren ermittelten Fahrbahnreibwert bestimmt.

Die Sensoren der Vielzahl von Sensoren stammen vorteilhafterweise jeweils aus einer Gruppe von Sensortypen umfassend Geschwindigkeits-Sensoren, GPS-Sensoren bzw. GPS-Empfänger, Abstandssensoren, Neigungssensoren, Beschleunigungssensoren, Drehwinkelsensoren, Stromaufnahmesensoren, Temperatursensoren, Kameras und Mikrofone sowie Sender und Empfänger zur Fahrzeug-zu-Fahrzeug-Kommunikation.

Das Sensorsignal des Sensors der Vielzahl von Sensoren wird bei einer vorteilhaften Notbremssystemvariante bei seiner Auswertung zur Bestimmung des zumindest einen Risikowertes mit Kartendaten oder Datenbankdaten abgeglichen. Zusätzlich oder alternativ kann auch der Risikowert bei seiner Auswertung zur Bestimmung des Unfallrisiko-Istwerts mit Kartendaten oder Datenbankdaten abgeglichen werden. Das Modell des Einspurfahrzeugs, das Modell der Umgebung und die Veränderung der Zustände der Modelle und Sensoren über die Zeit können ebenfalls mit Kartendaten oder Datenbankdaten abgeglichen werden.

Der momentane Zustand des Einspurfahrzeugs und der Umgebung setzt sich aus einzelnen Teilzuständen zusammen, die mit verschiedenen Sensoren bestimmt werden können. Aus den Teilzuständen können Kriterien zur Beurteilung des Unfallrisiko-Istwertes und die Risikowerte abgeleitet werden. Solche Risikowerte mit zugehörigen Sensoren zur Ermittlung der Zustände und Kriterien können sein:
- Geschwindigkeit des Einspurfahrzeugs und erlaubte Höchstgeschwindigkeit auf der Fahrbahn aus Geschwindigkeits-Sensor, Kartendaten, GPS-Sensor und Kamera, um die Einhaltung der Vorgaben für das Befahren der Straße zu beurteilen.
- Bremslichterkennung aus Kamera-Auswertung, um den Bewegungsvektor vorherfahrender Fahrzeuge vorauszuberechnen und Kollisionsgefahr zu ermitteln.
- Durchschlängelerkennung aus Kamera-Auswertung zum Abgleich mit bisher gezeigtem Verhalten des Fahrers mit einer Manöver Datenbank, die bei vergangenen Fahrten angelegt wurde, zur Beurteilung der Unfallwahrscheinlichkeit bei gefahrenem Manöver.
- Erkennung nachfolgender Fahrzeuge aus nach hinten gerichteter Kamera, um eine von den nachfolgenden Fahrzeugen ausgehende Unfallgefahr für das Einspurfahrzeug zu bestimmen.
- Helligkeit der Umgebung aus Helligkeits-Sensor oder Kamera um einen Korrekturfaktor zur Korrektur der Unfallwahrscheinlichkeit in Abhängigkeit der Wahrscheinlichkeit, dass das Einspurfahrzeug übersehen wird, zu bestimmen.
- Straßenverlauf aus Kartenmaterial und GPS-Empfänger um aus dem Fahrerverhalten und dem Zustand des Einspurfahrzeugs auf dem bevorstehenden Streckenverlauf die Unfallwahrscheinlichkeit zu bestimmen.
- Gefälle der Fahrbahn aus einem Neigungssensor, um das Gefälle bei der Berechnung des Bremsweges bzw. der Bestimmung der Wegstrecke, innerhalb derer das Einspurfahrzeug zum Stillstand zu bringen ist, berücksichtigen zu können.
- Seitenneigung des Einspurfahrzeugs aus einem Neigungssensor, um die Wahrscheinlichkeit für seitliches Wegrutschen des Einspurfahrzeugs und den Bremsweg bestimmen zu können
- Fahrerwunsch aus Manöver Datenbank, um Fahrerverhalten und gefahrenes Manöver vorherzubestimmen und Unfallrisiko-Sollwert dynamisch anzupassen.
- Fahrer-Abstützung (Hands on/off Erkennung) aus einer Schwingungsanalyse mittels eines Schwingungssensors, mittels Drehwinkel-Sensor um eine Lenkachse, eines Beschleunigungssensors am Lenker, Temperatursensor an den Griffen oder durch Stromsensor Lenker, um Bremsverhalten, Warnwert, Unfallwahrscheinlichkeit-Sollwert oder Unfallwahrscheinlichkeit-Istwert auf Abstützung des Fahrers anzupassen.
- Sozius-Abstützung aus Induktions-Stromsensor in Sitzbank, um auf Haltung des Sozius zu schließen und Bremskraftverlauf auf die Sozius-Abstützung anzupassen.
- Fahrbahnzustand aus Federweg-Sensor, um Bremsweg auf Fahrbahnzustand bzw. Straßenzustand anzupassen.
- Reibbeiwert aus Witterungsdaten aus nicht lokal gespeicherter Wetterdatenbank, Bildauswertung, Fahrbahndatenbank oder ABS-Cloud zur Anpassung der Wegstrecke, innerhalb derer das Einspurfahrzeug zum Stillstand zu bringen ist.
- Bremsentemperatur aus Temperatur-Sensor, um den Reibwert des Bremsbelags der Bremse für Bremskraftsollverlauf zu berücksichtigen.
- Beladungszustand des Einspurfahrzeugs aus Federwegsensor, um Modell des Einspurfahrzeugs anzupassen.
- Kollisionserkennung von voraus befindlichen Verkehr aus akustischen Sensoren, um vorhergehenden Unfall durch Risikowert bei der Berechnung des Unfallwahrscheinlichkeit-Istwert zu berücksichtigen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen schematischen Aufbau des Notbremssystems;
- Fig. 2: einen schematischen Aufbau der Warnmittel.

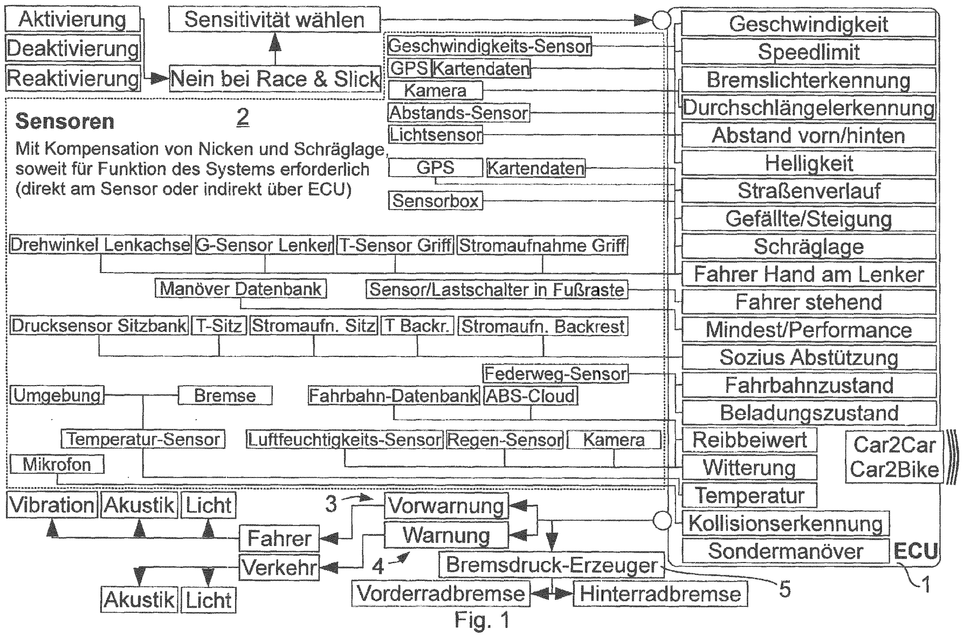

Die Figuren sind beispielhaft schematisch. Gleiche Bezugszeichen in den Figuren weisen auf gleiche funktionale und/oder strukturelle Merkmale hin. Figur 1 zeigt einen schematischen Aufbau des Notbremssystems. In der in Figur 1 gezeigten Ausführungsform ist die Aktivierung des Systems nur möglich, wenn keine speziellen "Race & Slick"-Reifen am Einspurfahrzeug montiert sind, was als Datequelle in dem Einspurfahrzeug hinterlegt ist. Nach dem Aktivieren werden in der ECU 1 (Electronic Control Unit oder Steuergerät) die angegebenen Risikowerte ermittelt. Die Risikowerte, wie Geschwindigkeit, Speedlimit (Geschwindigkeitsbeschränkung), Bremslichterkennung etc., werden aus der Vielzahl von Sensoren 2 bestimmt, die jeweils integral mit einer Sensorauswerteeinheit ausgebildet sind. Die Abstützung des Sozius wird beispielsweise aus einem Drucksensor in der Sitzbank, einem Temperatursensor in der Sitzbank (T Sitz), einem Stromaufnahmesensor in der Sitzbank, einem Temperatursensor in der Rückenlehne (T Backr.) und einem Stromaufnahmesensor in der Rückenlehne (Stormaufn. Backrest) ermittelt. Die ECU 1 bestimmt aus der Vielzahl von Risikowerten den Unfallrisiko-Istwert. Überschreitet der Unfallrisiko-Istwert einen Warnwert, wird eine Vorwarnung 3 mittels der Fahrerwarnmittel ausgelöst, um den Fahrer zu warnen. Überschreitet der Unfallrisiko-Istwert den Unfallrisiko-Sollwert, wird eine Warnung 4 mittels der Umgebungswarnmittel ausgelöst, um Personen in der Umgebung des Einspurfahrzeugs zu warnen. Zusätzlich zu der Warnung 4 wird der Bremsdruck-Erzeuger 5 angesteuert um in die Bremse einzugreifen. Der Bremsdruck-Erzeuger 5 wird so angesteuert, dass der Bremsdruck und damit die Bremskraft der Bremse dem von der ECU 1 vorbestimmten Bremskraftverlauf folgen.

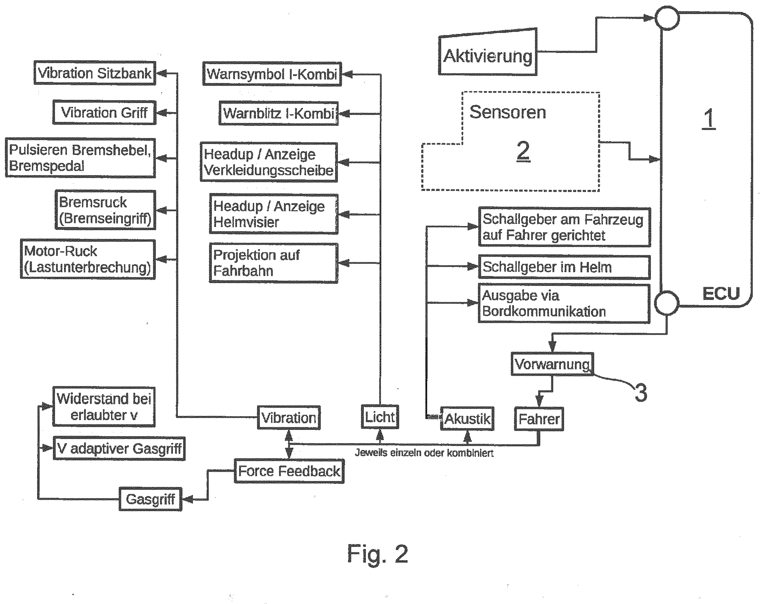

Figur 2 zeigt einen schematischen Aufbau der Fahrerwarnmittel zur Warnung des Fahrers des Einspurfahrzeugs. Nach Aktivierung des Notbremssystems wird beim Überschreiten des Warnwertes durch den Unfallrisiko-Istwert von der ECU 1 eine Vorwarnung 3 des Fahrers durch Warnmittel ausgelöst, wobei diese durch verschiedene Akustik-, Licht- und Vibrationssignale sowie eine Rückmeldung an den Fahrer über eine variierende Kraft (Force-Feedback) am Gasgriff des Einspurfahrzeugs realisiert ist.

Die Erfindung beschränkt sich in ihrer Ausführung nicht auf die vorstehend angegebenen bevorzugten Ausführungsbeispiele. Vielmehr ist eine Anzahl von Varianten denkbar, die unter den durch die Ansprüche definierten Schutzumfang fallen.

## Patentansprüche

1. Notbremssystem eines Einspurfahrzeugs mit Eingriff in eine Bremse des Einspurfahrzeugs, umfassend
eine Vielzahl von Sensoren (2), die verschiedene physikalische Größen ermitteln, zumindest eine mit einem Sensor der Vielzahl von Sensoren verbundene Sensorauswerteeinheit und eine mit der Sensorauswerteeinheit verbundene Notbremssystemsteuereinheit (1),
wobei der Sensor die von ihm ermittelte physikalische Größe der Sensorauswerteeinheit als ein Sensorsignal bereitstellt,
wobei
• das Sensorsignal des Sensors durch die jeweilige Sensorauswerteeinheit ausgewertet und zumindest ein Risikowert aus dem jeweiligen Sensorsignal bestimmt wird und die Sensorauswerteeinheit den zumindest einen Risikowert an der Notbremssystemsteuereinheit bereitstellt,
• der zumindest eine Risikowert mittels der Notbremssystemsteuereinheit in Abhängigkeit der Sensorsignale, aus denen er bestimmt ist, gewichtet, durch die Notbremssystemsteuereinheit ausgewertet und ein Unfallrisiko-Istwert aus allen Risikowerten bestimmt wird,
• der Unfallrisiko-Istwertes mittels der Notbremssystemsteuereinheit mit einem Unfallrisiko-Sollwert verglichen wird und
• die Bremse bei Überschreitung des Unfallrisiko-Istwertes über den Unfallrisiko-Sollwert mittels der Notbremssystemsteuereinheit in Abhängigkeit der Sensorsignale der Vielzahl von Sensoren betätigt wird,
wobei vor dem Ansteuern der Bremse eine Wegstrecke, innerhalb der das Einspurfahrzeug zum Stillstand zu bringen ist, eine auf der Wegstrecke notwendige Verzögerung des Einspurfahrzeugs durch die Bremse und ein Soll-Bremskraftverlauf zum Erreichen der notwendigen Verzögerung über die Wegstrecke basierend auf den Sensorsignalen der Vielzahl von Sensoren bestimmt werden, um das Einspurfahrzeug innerhalb der Wegstrecke zum Stillstand zu bringen, wobei die Wegstrecke, die Verzögerung und der Soll-Bremskraftverlauf beim Ansteuern der Bremse dynamisch und basierend auf den Sensorsignalen der Vielzahl von Sensoren angepasst werden und die Bremse beim Ansteuern mit seiner Bremskraft dem Soll-Bremskraftverlauf folgend angesteuert wird.

2. Notbremssystem nach Anspruch 1, wobei
die zumindest eine Sensorauswerteeinheit und die Notbremssystemsteuereinheit durch ein einziges Steuergerät gebildet sind oder die Sensoren mit jeweils einer Sensorauswerteeinheit eine Sensoreinheit bilden.

3. Notbremssystem nach Anspruch 1 oder 2, wobei
das Notbremssystem durch Fahrereingabe oder bei Start des Einspurfahrzeugs aktivierbar ist.

4. Notbremssystem nach einem der vorhergehenden Ansprüchen, wobei
die Sensorsignale der Vielzahl von Sensoren und/oder der zumindest eine Risikowert zeitkontinuierlich oder in Intervallen, die kleiner oder gleich 100 ms sind, ausgewertet und/oder bestimmt werden/wird.

5. Notbremssystem nach einem der vorhergehenden Ansprüchen, **dadurch gekennzeichnet, dass**
Warnmittel durch die Notbremssystemsteuereinheit beim Überschreiten des Unfallrisiko-Istwertes über einen Warnwert ansteuerbar sind, wobei der Warnwert kleiner oder gleich dem Unfallrisiko-Sollwert ist.

6. Notbremssystem nach dem vorhergehenden Anspruch, wobei
durch die Notbremssystemsteuereinheit beim Überschreiten des Unfallrisiko-Istwertes über den Warnwert, der kleiner als der Unfallrisiko-Sollwert ist, Fahrerwarnmittel als Warnmittel zur Warnung des Fahrers ansteuerbar sind und beim Überschreiten des Unfallrisiko-Istwertes über den Unfallrisiko-Sollwert Umgebungswarnmittel als Warnmittel zur Warnung von Personen in der Umgebung des Einspurfahrzeugs ansteuerbar sind.

7. Notbremssystem nach dem vorhergehenden Anspruch, wobei das Fahrerwarnmittel ein auf den Fahrer wirkendes Vibrationselement, erstes Akustik-, erstes Lichtsignal, ein durch die Bremse und die Notbremssystemsteuereinheit erzeugter Bremsruck oder eine Motorkraftunterbrechung ist und das Umgebungswarnmittel ein von dem Einspurfahrzeug an die Umgebung ausgesendetes zweites Akustik- oder zweites Lichtsignal ist.

8. Notbremssystem nach einem der vorhergehenden Ansprüchen 5 bis 7, wobei der Unfallrisiko-Sollwert und/oder Warnwert durch Fahrereingabe und/oder sensorsignalabhängig einstellbar sind/ist.

9. Notbremssystem nach einem der vorhergehenden Ansprüche, wobei die Wegstrecke aus einem von einem ersten Sensor der Vielzahl von Sensoren ermittelten Abstand zu einem Hindernis und der Soll-Bremskraftverlauf aus der Wegstrecke und einem von einem zweiten Sensor der Vielzahl von Sensoren ermittelten Fahrbahnreibwert bestimmt wird.

10. Notbremssystem nach einem der vorhergehenden Ansprüchen, wobei die Sensoren der Vielzahl von Sensoren jeweils aus einer Gruppe von Sensortypen umfassend Geschwindigkeits-Sensoren, GPS-Sensoren, Abstandssensoren, Neigungssensoren, Beschleunigungssensoren, Drehwinkelsensoren, Stromaufnahmesensoren, Temperatursensoren, Kameras und Mikrofone stammen.

11. Notbremssystem nach einem der vorhergehenden Ansprüchen, wobei das Sensorsignal des Sensors der Vielzahl von Sensoren bei seiner Auswertung zur Bestimmung des zumindest einen Risikowertes und/oder der Risikowert bei seiner Auswertung zur Bestimmung des Unfallrisiko-Istwerts mit Kartendaten oder Datenbankdaten abgeglichen werden/wird.

## Claims

1. Emergency braking system of a single-track vehicle, which intervenes in a brake of the single-track vehicle, comprising
a plurality of sensors (2) which detect various physical variables, at least one sensor evaluation unit which is connected to one sensor of the plurality of sensors and an emergency braking system control unit (1) which is connected to the sensor evaluation unit, wherein
the sensor delivers the physical variable detected thereby to the sensor evaluation unit in the form of a sensor signal,
wherein
• the sensor signal of the sensor is evaluated by the respective sensor evaluation unit, and at least one risk value is determined from the respective sensor signal, and the sensor evaluation unit delivers the at least one risk value to the emergency braking system control unit,
• the at least one risk value is weighted by means of the emergency braking system control unit, in accordance with the sensor signals from which it has been determined, is evaluated by the emergency braking system control unit, and an accident risk actual value is determined from all the risk values,
• the accident risk actual value is compared with an accident risk target value by means of the emergency braking system control unit, and
• in the event that the accident risk actual value exceeds the accident risk target value, the brake is actuated by means of the emergency braking system control unit, in accordance with the sensor signals from the plurality of sensors,
wherein, prior to the actuation of the brake, a road distance within which the single-track vehicle is to be brought to a halt, a requisite slow-down of the single-track vehicle by means of the brake within said road distance, and a target braking force characteristic for the achievement of the requisite slow-down over said road distance, on the basis of the sensor signals from the plurality of sensors, are determined, in order to bring the single-track vehicle to a halt within said road distance, wherein said road distance, slow-down and target braking force characteristic, upon the actuation of the brake, are dynamically adjusted on the basis of the sensor signals from the plurality of sensors and, upon actuation, the braking force of the brake is actuated to track the target braking force characteristic.

2. Emergency braking system according to Claim 1, wherein
the at least one sensor evaluation unit and the emergency braking system control unit are constituted by a single control device, or the sensors, each having a sensor evaluation unit, constitute a sensor unit.

3. Emergency braking system according to Claim 1 or 2, wherein
the emergency braking system can be activated by a driver input, or by the start-up of the single-track vehicle.

4. Emergency braking system according to one of the preceding claims, wherein
the sensor signals from the plurality of sensors and/or the at least one risk value are/is evaluated and/or determined continuously in time, or at intervals which are less than or equal to 100 ms.

5. Emergency braking system according to one of the preceding claims, **characterized in that**
in the event of an overshoot of a warning value by the accident risk actual value, warning means can be actuated by the emergency braking system control unit, wherein the warning value is less than or equal to the accident risk target value.

6. Emergency braking system according to the preceding claim, wherein
in the event of an overshoot of the warning value, which is lower than the accident risk target value, by the accident risk actual value, driver warning means, by way of warning means for the warning of the driver and, in the event of an overshoot of the accident risk target value by the accident risk actual value, environmental warning means, by way of warning means for the warning of persons in the environment of the single-track vehicle, can be actuated by the emergency braking system control unit.

7. Emergency braking system according to the preceding claim, wherein
the driver warning means is a vibrating element which acts on the driver, a first acoustic signal or a first light signal, a braking jolt which is generated by the brake and the emergency braking system control unit or a load interruption on the engine, and
the environmental warning means is a second acoustic signal or a second light signal which is transmitted by the single-track vehicle to the environment.

8. Emergency braking system according to one of the preceding Claims 5 to 7, wherein
the accident risk target value and/or the warning value are/is adjustable by means of a driver input and/or in a sensor signal-dependent manner.

9. Emergency braking system according to one of the preceding claims, wherein
the road distance is determined from a distance to an obstacle detected by a first sensor of the plurality of sensors, and the target braking force characteristic is determined from the road distance and from a carriageway friction coefficient detected by a second sensor of the plurality of sensors.

10. Emergency braking system according to one of the preceding claims, wherein
the sensors of the plurality of sensors originate, in each case, from a group of sensor types comprising speed sensors, GPS sensors, distance sensors, inclination sensors, acceleration sensors, rotational angle sensors, current consumption sensors, temperature sensors, cameras and microphones.

11. Emergency braking system according to one of the preceding claims, wherein
the sensor signal of the sensor of the plurality of sensors, in the evaluation thereof for the determination of the at least one risk value, and/or the risk value, in the evaluation thereof for the determination of the accident risk actual value, are/is compared with map data or database data.

## Revendications

1. Système de freinage d'urgence d'un véhicule à voie unique avec intervention dans un frein du véhicule à voie unique, comprenant une pluralité de capteurs (2) qui établissent différentes grandeurs physiques, au moins une unité d'évaluation de capteur reliée à un capteur de la pluralité de capteurs, et une unité de commande de système de freinage d'urgence (1) reliée à l'unité d'évaluation de capteur (1),
dans lequel le capteur fournit la grandeur physique qu'il a établie à l'unité d'évaluation de capteur sous la forme d'un signal de capteur,
dans lequel
• le signal de capteur du capteur est évalué par l'unité d'évaluation de capteur respective, et au moins une valeur de risque est déterminée à partir du signal de capteur respectif, et l'unité d'évaluation de capteur fournit ladite au moins une valeur de risque à l'unité de commande de système de freinage d'urgence,
• ladite au moins une valeur de risque est pondérée au moyen de l'unité de commande de système de freinage d'urgence en fonction des signaux de capteur à partir desquels elle est déterminée, est évaluée par l'unité de commande de système de freinage d'urgence, et une valeur réelle de risque d'accident est déterminée à partir de toutes les valeurs de risque,
• la valeur réelle de risque d'accident est comparée au moyen de l'unité de commande de système de freinage d'urgence avec une valeur de consigne de risque d'accident, et
• le frein est actionné au moyen de l'unité de commande de système de freinage d'urgence en fonction des signaux de capteur de la pluralité de capteurs si la valeur réelle de risque d'accident passe au-dessus de la valeur de consigne de risque d'accident,
dans lequel, avant le pilotage du frein, une distance de trajet à l'intérieur de laquelle le véhicule à voie unique doit être immobilisé est déterminée, une décélération du véhicule à voie unique par le frein, nécessaire sur la distance de trajet, est déterminée, et une courbe de force de freinage de consigne pour atteindre la décélération nécessaire sur la distance de trajet est déterminée sur la base des signaux de capteur de la pluralité de capteurs afin d'immobiliser le véhicule à voie unique à l'intérieur de la distance de trajet, dans lequel, lors du pilotage du frein, la distance de trajet, la décélération et la courbe de force de freinage de consigne sont adaptées dynamiquement et sur la base des signaux de capteur de la pluralité de capteurs, et le frein est piloté lors du pilotage en suivant avec sa force de freinage la courbe de force de freinage de consigne.

2. Système de freinage d'urgence selon la revendication 1, dans lequel ladite au moins une unité d'évaluation de capteur et l'unité de commande de système de freinage d'urgence sont formées par un seul appareil de commande, ou les capteurs forment une unité de capteur respectivement avec une unité d'évaluation de capteur.

3. Système de freinage d'urgence selon la revendication 1 ou 2, dans lequel le système de freinage d'urgence peut être activé par une entrée du conducteur ou lors du démarrage du véhicule à voie unique.

4. Système de freinage d'urgence selon l'une quelconque des revendications précédentes, dans lequel les signaux de capteur de la pluralité de capteurs et/ou ladite au moins une valeur de risque sont évalués et/ou déterminés en continu dans le temps ou à des intervalles qui sont inférieurs ou égaux à 100 ms.

5. Système de freinage d'urgence selon l'une quelconque des revendications précédentes, **caractérisé en ce que** des moyens d'avertissement peuvent être pilotés par l'unité de commande de système de freinage d'urgence si la valeur réelle de risque d'accident passe au-dessus d'une valeur d'avertissement, la valeur d'avertissement étant inférieure ou égale à la valeur de consigne de risque d'accident.

6. Système de freinage d'urgence selon la revendication précédente, dans lequel, si la valeur réelle de risque d'accident passe au-dessus de la valeur d'avertissement qui est inférieure à la valeur de consigne de risque d'accident, l'unité de commande de système de freinage d'urgence peut piloter des moyens d'avertissement de conducteur comme moyens d'avertissement afin d'avertir le conducteur, et si la valeur réelle de risque d'accident passe au-dessus de la valeur de consigne de risque d'accident, des moyens d'avertissement d'environnement peuvent être pilotés comme moyens d'avertissement pour avertir les personnes dans l'environnement du véhicule à voie unique.

7. Système de freinage d'urgence selon la revendication précédente, dans lequel le moyen d'avertissement de conducteur est un élément vibrant agissant sur le conducteur, un premier signal sonore, un premier signal lumineux, un coup de frein généré par le frein et l'unité de commande de système de freinage d'urgence ou une coupure de force motrice, et le moyen d'avertissement d'environnement est un deuxième signal sonore ou un deuxième signal lumineux émis par le véhicule à voie unique à destination de l'environnement.

8. Système de freinage d'urgence selon l'une quelconque des revendications précédentes 5 à 7, dans lequel la valeur de consigne de risque d'accident et/ou la valeur d'avertissement sont réglables par une entrée du conducteur et/ou en fonction d'un signal de capteur.

9. Système de freinage d'urgence selon l'une quelconque des revendications précédentes, dans lequel la distance de trajet est déterminée à partir d'une distance établie par un premier capteur de la pluralité de capteurs jusqu'à un obstacle, et la courbe de force de freinage de consigne est déterminée à partir de la distance de trajet et d'un coefficient de friction de la chaussée établi par un deuxième capteur de la pluralité de capteurs.

10. Système de freinage d'urgence selon l'une quelconque des revendications précédentes, dans lequel les capteurs de la pluralité de capteurs sont issus respectivement d'un groupe de types de capteurs comprenant des capteurs de vitesse, des capteurs GPS, des capteurs de distance, des capteurs d'inclinaison, des capteurs d'accélération, des capteurs d'angle de rotation, des capteurs de consommation électrique, des capteurs de température, des caméras et des microphones.

11. Système de freinage d'urgence selon l'une quelconque des revendications précédentes, dans lequel, lors de son évaluation pour la détermination de ladite au moins une valeur de risque, le signal de capteur du capteur de la pluralité de capteurs, et/ou lors de son évaluation pour la détermination de la valeur réelle de risque d'accident, la valeur de risque sont recoupés avec des données cartographiques ou des données de base de données.
